Europäisches Patentamt

European Patent Office

Office européen des brevets

(11) Publication number: **0 333 504**
A2

(12) # EUROPEAN PATENT APPLICATION

(21) Application number: 89302655.9

(51) Int. Cl.⁴: **A 01 K 11/00**

(22) Date of filing: 17.03.89

(30) Priority: 18.03.88 ZA 881960

(43) Date of publication of application:
20.09.89 Bulletin 89/38

(84) Designated Contracting States:
AT BE CH DE ES FR GB GR IT LI LU NL SE

(71) Applicant: **Anderson, Malcolm Donald**
**5 Valley Vista Road**
**Pietermaritzburg Natal Province (ZA)**

**Beaumont, Nicholas George**
**14 Lincoln Road**
**Pietermaritzburg Natal Province (ZA)**

(72) Inventor: **Anderson, Malcolm Donald**
**5 Valley Vista Road**
**Pietermaritzburg Natal Province (ZA)**

**Beaumont, Nicholas George**
**14 Lincoln Road**
**Pietermaritzburg Natal Province (ZA)**

(74) Representative: **Bond, Bentley George et al**
**HASELTINE LAKE & CO. Hazlitt House 28 Southampton**
**Buildings Chancery Lane**
**London, WC2A 1AT (GB)**

(54) An animal ear tag.

(57) The invention relates to an animal ear tag which includes a male part (10) having an elongate hollow stem (14) projecting from a rear flange (16). The free end of the stem has a relatively rigid pointed head formation (18) secured thereto that can penetrate the ear of an animal and engage a female part (12), whereby the two parts are held together attached to the ear of an animal. A tag (36) for identification markings can extend from either one or both the male and female parts.

FIG 1

**Description**

## AN ANIMAL EAR TAG

THIS INVENTION relates to an animal ear tag.

The invention relates in particular to an animal ear tag of the type including a male part including an elongate hollow stem and a pointed head formation at the front end of the stem, the head formation being formed to engage a female part, after having penetrated the ear of an animal, and thereby effectively secure the ear tag to the animal's ear.

Known ear tag arrangements of this type are disclosed in US Patent B4,209,924 (Fearing), UK Patent Application GB2 015 932 A (Yvorra) and PCT Application WO 82/01639 (Leader Products Proprietary Limited). The main two disadvantages of the above arrangements are that the female parts are slidably displaceable on the male part stems, which often results in wounds becoming septic as a result of lack of air when opposing tag portions abut opposite sides of the ear, and/or female parts being held in engagement with the male parts by the head formations only, so that failure of the head formations immediately result in loss of tags. Fearing particularly suffers from both disadvantages whereas the Leader Products invention suffers at least from the second disadvantage. The Yvorra invention suffers at least from the first disadvantage, this invention particularly making provision for the separation of the head formation after engagement of the ear tag to an animal's ear.

It is accordingly an object of this invention to provide an animal ear tag which overcomes, at least partially, the above disadvantages. As such, it is an object of the invention to provide an animal ear tag of the type defined and with which, after engagement of the male part with the female part, the position of the female part is fixed and with which the head formation is not totally relied upon for the permanent location of the female part on the male part.

According to the invention there is provided an animal ear tag, which includes
a male part including an elongate hollow stem defining a peripheral recess near the operative front end thereof and a relevatively rigid pointed head formation secured to the stem pointing axially away from the front end of the stem, the head formation abutting the front end of the stem and the opposing abutting surfaces of the stem and the head formation being substantially congruent; and
a female part including an apertured, resiliently deformable locating formation that can permit the pointed head formation and operative front end of the stem of the male part to be urged through the aperture in the locating formation and the location of the locating formation within the peripheral recess of the stem.

The elongate stem of the male part may have a radially outwardly projecting flange formation projecting therefrom at the operative rear end thereof. The elongate hollow stem and the flange formation may be integrally formed of a resiliently deformable material.

The head formation of the male part may be of any suitable metal material and, preferably, may be of brass.

Further according to the invention, the head formation of the male part may have a shank projecting therefrom, extending into the operative front end of the stem for the secure location of the head formation with respect to the stem. As such, the shank and the stem may define complementary engagement formations whereby the shank of the head formation is securely held within the stem. As such, the stem of the male part may be moulded onto the shank of the head formation although it is also anticipated that the shank of the head formation may be forced into the hollow stem into a position in which the complementary formations engage one another. The said complementary engagement formations may be located at a location further apart from the front end of the stem than the nearest end of the recess formation to the said end of the stem.

The head formation may further define a circumferential groove therein at a location between the pointed end of the head formation and its end that abuts the free end of the stem. The female part may include a sleeve formation that projects from the locating formation and surround the aperture therein, the sleeve formation being dimensioned to house the head formation and operative front end of the stem of the male part when urged through the aperture in the locating formation. The wall thickness of the locating formation in the region of the aperture therein may be such that it can be snugly received in the peripheral recess of the stem.

Still further, the female part may have a tag extending from the locating formation, onto which identification markings can be applied.

The stem and the flange of the male part and the female part may be of a synthetic plastics material that permits the location of the female part with respect to the male part of the animal ear tag.

Further features of the animal ear tag, in accordance with the invention, including the benefits of the ear tag are described hereinafter with reference to suitable drawings.

The invention is now described, by way of an example, with reference to the accompanying diagrammatic drawings, in which:

Figure 1 shows a cross-sectional side view of the male part of an animal ear tag, in accordance with the invention; and

Figure 2 shows a cross-sectional side view of a part of the female part of an animal ear tag, in accordance with the invention.

Referring to the drawings, the male part of an animal ear tag, in accordance with the invention, is generally indicated by the reference numeral 10, whereas the female part of the ear tag is generally indicated by the reference numeral 12.

The male part 10 comprises an elongate hollow stem 14 projecting from a radially extending flange formation 16 at the operative rear end of the stem 14. A pointed head formation 18 is secured to the operative front end of the stem 14 by means of a shank 20 extending from the head formation 18 into the hollow stem 14. The flange 16 may form a part of a tag onto which identification markings can be applied.

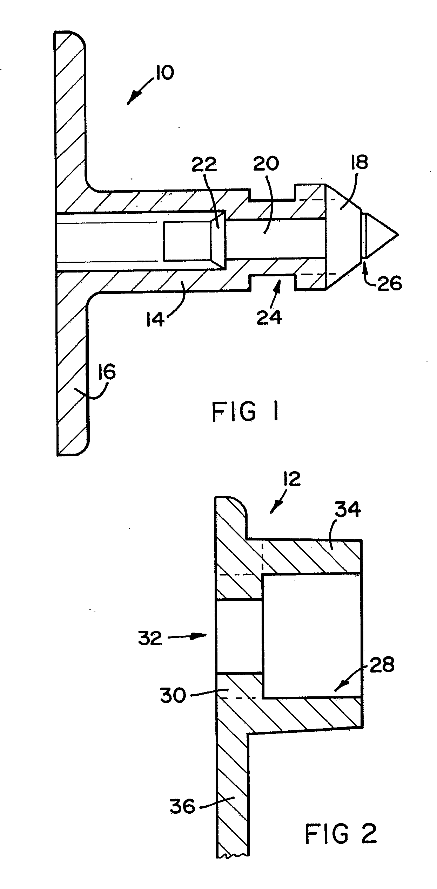

The stem 14 and flange formation 16 are integrally moulded of a suitable synthetic plastics material, whereas the head formation 18 is of a relatively rigid material such as of brass, or any other suitable metal material, or the like. The head formation 18 may either be located upon formation of the stem 14 and flange formation 16 during moulding thereof or, alternatively, may be pushed into its operative configuration as shown by urging the shank 20 of the head formation 18 into the stem. As is clearly illustrated in Figure 1, the stem 14 and shank 20 define suitable complementary engagement formations that permit the secure engagement of the shank within the stem. The chamferred configuration of the shoulder formation 22 is clearly designed so that the shank can in fact be pushed into the stem 14 into its operative configuration, the resilient deformability of the synthetic plastics material of which the stem 14 may be made being such that this is permitted. The said complementary engagement formations are positioned further from the front end of the stem than the end of the recess formation nearest said end of the stem. This enhances the secure location of the female part on the male part as will be described in more detail hereafter.

The stem 14 further defines a peripheral recess 24 therein near the operative front end thereof, whereas the head formation 18 defines a circumferential groove 26 therein at a location intermediate between its pointed front end and its rear end.

The maximum diameter of the head formation 18 defined at the location where it abuts the front end of the stem is substantially equal to the diameter of the stem and, as such, the abutting surfaces of the stem 14 and pointed head formation 18 are substantially congruent.

The female part 12 of the animal ear tag of the invention comprises a cup formation 28, the base wall 30 of the cup formation 28 having an aperture 32 therein which has a diameter approximately equal to the diameter of the stem 14 of the male part 10 in the region of the recess formation 24. The wall thickness of the base wall 30 is further approximately equal to the width of the recess 24. The female part is integrally formed of a resiliently deformable synthetic plastics material, the resilience of the material permitting the head formation 18 and the front end of the stem 14 to be pushed through the aperture 32 into a location in which the base wall 30 of the cup formation 28 engages the recess 24 defined by the stem 14, thereby securely locating the male part 10 of the animal ear tag with respect to the female part 12. The base wall 30 thus serves as a locating formation whereby the female part is located with respect to the male part, in use.

When so located, the surrounding side walls 34 defining the cup formation 28 will form a sleeve formation that houses the head formation 18 of the male part 10 therein, thereby providing protection against possible injury that can occur as a result of the pointed head formation 18 otherwise being exposed. The female part 12 further has a tag 36 extending integrally therefrom (only partially shown), the tag permitting suitable markings to be applied to the ear tag whereby particular animals can thus be identified.

The animal ear tag of the invention can be applied by means of a suitable applicator that can act directly on the shank 20 of the head formation 18 to urge the head formation 18 and the front part of the stem 14 through the aperture 32 of the female part 12, suitable applicators that can carry out this function being known.

By providing the recess formation 24 for locating the female part 12 with respect to the male part 10, a fixed spacing is provided between the flange formation 16 and the base wall 30 of the cup formation 28, this configuration permitting a hole formed in an animal's ear during location of the animal ear tag to be exposed to air and thereby permitting effective healing of the resulting wound and the prevention of necrosis. The circumferential groove 26 defined by the head formation 18 fulfils a punching function insofar as this will cause a part of an animal's ear to be punched from the remainder of the ear and it is believed that this results in less serious wounds during animal ear tag location, which offen occur otherwise as a result of tearing of the ear, or the like.

By providing for the location of the female part 12 via a recess 24 spaced from the operative front end of the stem 14 of the male part 10, the head formation 18 does not fulfill any locating function and any damage such as breaking up of the head formation 18 which does occur at times with the use of animal ear tags of the type, will thus no longer cause the two parts of the animal ear tag to separate from one another, thus permitting the ear tag to fall from an animal's ear. Failure of the head formation can often occur as a result of application of an animal ear tag which may in turn occur as a result of any weaknesses in the material of the head formation or weaknesses occuring as a result of the formation of the head formation or its insertion into the stem of the male part. Such damage can often also occur as a result of the female part of an animal ear tag acting on the head formation in a situation in which the head formation is responsible for the location of the female part. The loss of animal ear tags as a result of insecure pointed head formations is also greatly eliminated insofar as the stem of the male part itself ensures the effective location of the female part with respect thereto.

Still further, because of the configuration between the complementary engagement formations of the stem and shank of the head formation and the recess formation, if it is attempted to pull the female part from the male part, both the stem and the shank of the head formation will have to fail and, as such, a much larger force will be required than for known animal ear tag arrangements including the prior art referred to herein. This is advantageous as many animals try to get rid of ear tags and cause the female parts to be pulled upon. The female parts also sometimes get hooked up and separation will be less likely than with known tags.

**Claims**

1. An animal ear tag including a male part and a female part, characterised in that the male part includes an elongate hollow stem defining a peripheral recess near the operative front end thereof and a relatively rigid pointed head formation secured to the stem pointing axially away from the front end of the stem, the head formation abutting the front end of the stem and the opposing abutting surfaces of the stem and the head formation being substantially congruent, and
the female part includes an apertured, resiliently deformable locating formation that can permit the pointed head formation and operative front end of the stem of the male part to be urged through the aperture in the locating formation and the location of the locating formation within the peripheral recess of the stem.

2. An ear tag as claimed in Claim 1, characterised in that the elongate stem of the male part has a radially outwardly projecting flange formation projecting therefrom at the operative rear end thereof.

3. An ear tag as claimed in Claim 1 or Claim 2, characterised in that the elongate hollow stem and the flange formation are integrally formed of a resiliently deformable material.

4. An ear tag as claimed in any one of the preceding claims, characterised in that the head formation of the male part is of metal.

5. An ear tag as claimed in Claim 4, characterised in that the head formation is of brass.

6. A ear tag as claimed in any one of the preceding claims, characterised in that the head formation of the male part has a shank projecting therefrom, extending into the operative front end of the stem for the secure location of the head formation with respect to the stem.

7. An ear tag as claimed in Claim 6, characterised in that the shank and the stem define complementary engagement formations whereby the shank of the head formation is securely held within the stem.

8. An ear tag as claimed in Claim 7, characterised in that the complementary engagement formations are located at a location further apart from the front end of the stem than the nearest end of the recess formation to the said end of the stem.

9. An ear tag as claimed in any one of Claims 6 to 8, characterised in that the stem of the male part is moulded onto the shank of the head formation.

10. An ear tag as claimed in any one of the preceding claims, characterised in that the head formation defines a circumferential groove therein at a location between the pointed end of the head formation and its end that abuts the free end of the stem.

11. An ear tag as claimed in any one of the preceding claims, characterised in that the female part includes a sleeve formation that projects from the locating formation and surrounds the aperture therein, the sleeve formation being dimensioned to house the head formation and operative front end of the stem of the male part when urged through the aperture in the locating formation.

12. An ear tag as claimed in any one of the preceding claims, characterised in that the wall thickness of the locating formation in the region of the aperture therein is such that it can be snugly received in the peripheral recess of the stem.

13. An ear tag as claimed in any one of the preceding claims, characterised in that the female part has a tag extending from the locating formation, onto which identification markings can be applied.

14. An ear tag as claimed in any one of the preceding claims, in which the stem and the flange formation of the male part and the female part are of a synthetic plastics material.

FIG 1

FIG 2